Europäisches Patentamt

**European Patent Office**

**Office européen des brevets**

(19)

(11) Veröffentlichungsnummer: **0 190 560**

**A2**

(12) # EUROPÄISCHE PATENTANMELDUNG

(21) Anmeldenummer: 86100202.0

(22) Anmeldetag: 09.01.86

(51) Int. Cl.⁴: **C 08 G 18/62**
**C 08 G 18/14**

(30) Priorität: 22.01.85 DE 3501857

(43) Veröffentlichungstag der Anmeldung:
13.08.86 Patentblatt 86/33

(84) Benannte Vertragsstaaten:
BE DE FR GB IT NL

(71) Anmelder: BAYER AG
Konzernverwaltung RP Patentabteilung
D-5090 Leverkusen 1 Bayerwerk(DE)

(72) Erfinder: Rasshofer, Werner, Dr.
Leopold-Gmelin-Strasse 31
D-5000 Koeln 80(DE)

(72) Erfinder: Paul, Rainer, Dr.
Oberhausener-Strasse 55
D-4330 Mülheim/Ruhr(DE)

(72) Erfinder: Probst, Joachim, Dr.
Humperdinck-Strasse 42
D-5090 Leverkusen 1(DE)

(54) Verfahren zur Herstellung von neuen Polyisocyanat-Zubereitungen, die nach dem Verfahren erhältlichen Zubereitungen und ihre Verwendung bei der Herstellung von Kunststoffen nach dem Isocyanat-Polyadditionsverfahren.

(57) Verfahren zur Herstellung von Urethangruppen aufweisenden Polyisocyanat-Zubereitungen mit einem NCO-Gehalt von 0,5 bis 45 Gew.-% durch Umsetzung von organischen Polyisocyanaten mit einem NCO-Gehalt von 30 bis 50 Gew.-% mit organischen Polyhydroxypolyacrylaten bzw. Gemischen von organischen polyhydroxypolyacrylaten mit anderen Polyhydroxylverbindungen des Molekulargewichtsbereichs 62 bis 12 000, die so erhältlichen Polyisocyanat-Zubereitungen und ihre Verwendung als Aufbaukomponente bei der Herstellung von Kunststoffen nach dem Isocyanat-Polyadditionsverfahren.

EP 0 190 560 A2

0190560

BAYER AKTIENGESELLSCHAFT           5090 Leverkusen, Bayerwerk

Konzernverwaltung RP               Wr/by-c
Patentabteilung

Verfahren zur Herstellung von neuen Polyisocyanat-
Zubereitungen, die nach dem Verfahren erhältlichen
Zubereitungen und ihre Verwendung bei der Herstellung
von Kunststoffen nach dem Isocyanat-Polyadditionsverfahren

Die vorliegende Erfindung betrifft ein Verfahren zur
Herstellung von neuen Polyisocyanat-Zubereitungen, die
im wesentlichen NCO-Semiprepolymere auf Basis von organischen Polyisocyanaten und bestimmten Polyhydroxypolyacrylaten darstellen, die nach dem Verfahren erhältlichen Polyisocyanat-Zubereitungen und ihre Verwendung bei der Herstellung von Polyurethanen oder von
Polyurethanpolyharnstoffen nach dem Isocyanat-Polyadditionsverfahren, insbesondere von gegebenenfalls
zellförmigen Formkörpern auf Basis von Polyurethanen
oder von Polyurethan-Polyharnstoffen.

Die Herstellung von Formkörpern mit einer geschlossenen
Außenhaut und einem zelligen Kern nach dem Isocyanat-
Polyadditionsverfahren ist grundsätzlich bekannt (vgl.
z.B. Kunststoffe 60, Seiten 3 bis 7 (1970) oder
DE-AS 1 196 864). Bei geeigneter Wahl der Ausgangskom-

Le A 23 460-Ausland

0190560

ponenten ist es bei diesem Verfahren möglich, sowohl
elastische als auch starre Formkörper herzustellen.
Falls bei dem Verfahren keine oder nur geringe Mengen
an Treibmitteln mitverwendet werden, entstehen massive
Formteile. Die Verarbeitung der Rohstoffe erfolgt vorzugsweise nach dem sogenannten Reaktionsspritzgußverfahren (RSG- oder RIM-Verfahren). Es handelt sich dabei um eine Fülltechnik, bei der die flüssigen Ausgangskomponenten über sogenannte zwangsgesteuerte Mischköpfe
innerhalb kürzester Zeit in die jeweilige Form eingetragen werden. Bei der Herstellung von Formteilen für
den Automobilbau werden hierbei beispielsweise di- und/
oder trifunktionelle Polyetherpolyole, beispielsweise
des Molekulargewichtsbereichs 3000 bis 7000, und niedermolekulare Diole wie Ethylenglykol und/oder Butandiol-
1,4 bzw. aromatische Diamine mit sterisch gehinderten
Aminogruppen, mit Polyisocyanaten, vorzugsweise flüssigen
Polyisocyanaten bzw. Polyisocyanatgemischen der Diphenylmethanreihe, gegebenenfalls in Gegenwart von
Treibmitteln, zur Reaktion gebracht (vgl. z.B.
US-PS 4 218 543 oder US-PS 4 065 410). Die so hergestellten Formteile weisen ein ausgezeichnetes mechanisches Eigenschaftsniveau auf. Es hat sich jedoch gezeigt, daß die Formteile mitunter eine Oberfläche aufweisen, die nicht gänzlich frei von Vertiefungen und
Poren ist. Solche Oberflächenstörungen lassen sich
durch Einreiben des Formteils mit einem Farbpulver
sichtbar machen und geben sich durch einen aufhellenden,
lichtstreuenden Effekt gegenüber einer tiefschwarzen

Le A 23 460

(Einfärbung mit Graphit), ungestörten Oberfläche zu erkennen. Darüber hinaus sind diese Oberflächenstörungen oft Ansatzpunkte für etwaige mechanisch bewirkte Beschädigungen.

Solche Oberflächenstörungen in Form von Poren oder Narben, sogenannte "pin holes", müssen oft mit einer Reparatur- oder Füllmasse gespachtelt und nachfolgend geschliffen, evtl. vorher und nachher entfettet, sowie gegebenenfalls lackiert werden und erfordern somit zu ihrer Beseitigung einen hohen Aufwand.

Mit der vorliegenden Erfindung werden nunmehr neuartige Polyisocyanat-Zubereitungen zur Verfügung gestellt, deren (Mit)Verwendung als Polyisocyanatkomponente bei der Herstellung von Formkörpern auf Polyurethan- oder Polyurethanpolyharnstoff-basis die Herstellung von Formkörpern ohne derartige Oberflächendefekte erlaubt, wobei die Formkörper sich durch sehr gute mechanische Eigenschaften auszeichnen.

Gegenstand der Erfindung ist ein Verfahren zur Herstellung von Urethangruppen aufweisenden Polyisocyanat-Zubereitungen mit einem NCO-Gehalt von 0,5 bis 45 Gew.-% durch Umsetzung von

a)    organischen Polyisocyanaten mit einem NCO-Gehalt von 30 bis 50 Gew.-% oder Gemischen von organischen Polyisocyanaten mit einem NCO-Gehalt von 30 bis 50 Gew.-% mit

Le A 23 460

b)   organischen Polyhydroxylverbindungen,

sowie gegebenenfalls in Gegenwart von

c)   weiteren Hilfs- und Zusatzmitteln,

unter Einhaltung eines Äquivalentverhältnisses von Isocyanatgruppen zu Hydroxylgruppen von mindestens 1,8:1, dadurch gekennzeichnet, daß man als Polyhydroxylverbindungen b)

b1)   gegebenenfalls seitenständige Urethan- oder Estergruppen und im statistischen Mittel pro Molekül mindestens eine alkoholische Hydroxylgruppe aufweisende Polyhydroxypolyacrylate eines dampfdruckosmometrisch bestimmbaren mittleren Molekulargewichts von 232 bis 100 000, gegebenenfalls in Abmischung mit bis zu 250 Gew.-%, bezogen auf b1), an

b2)   anderen aus der Polyurethanchemie an sich bekannten Polyhydroxylverbindungen des Molekulargewichtsbereichs 62 bis 12 000

verwendet.

Gegenstand der Erfindung sind auch die nach diesem Verfahren erhältlichen Polyisocyanat-Zubereitungen.

Gegenstand der Erfindung ist auch die Verwendung dieser Polyisocyanat-Zubereitungen als Aufbaukomponente bei der

Le A 23 460

Herstellung von Polyurethanen oder von Polyurethanharnstoffen nach dem Isocyanat-Polyadditionsverfahren.

Die Herstellung von urethanmodifizierten Polyisocyanat-
Zubereitungen, d.h. von endständige Isocyanatgruppen
aufweisenden Prepolymeren bzw. Semiprepolymeren, insbesondere auf Basis von Polyisocyanaten bzw. Polyisocyanatgemischen der Diphenylmethanreihe (4,4'-Diisocyanatodiphenylmethan, dessen Gemische mit 2,4'- und gegebenenfalls 2,2'-Diisocyanatodiphenylmethan oder Phosgenierungsprodukte von Anilin/Formaldehyd-Kondensaten,
die neben diesen Diisocyanaten deren höhere Homologe
enthalten) und den unterschiedlichsten Polyhydroxylverbindungen ist bereits bekannt (vgl. z.B. EP-A-10 850
oder 66 130; DE-OS 2 347 207, 2 404 166, 2 513 793,
2 513 796, 2 620 222, 2 622 104, 2 732 182, 2 737 338,
2 804 375, 2 810 596, 2 815 579 oder 2 913 126;
US-PS 3 644 457, 4 055 548, 4 234 714 oder 4 321 333,
sowie GB-PS 1 369 334).

Im allgemeinen geht es bei den Verfahren dieser Vorveröffentlichungen um die Verflüssigung von bei Raumtemperatur festem Diisocyanatodiphenylmethan, insbesondere 4,4'-
Diisocyanatodiphenylmethan oder um die Verminderung der
Kristallisationsneigung von bei Raumtemperatur flüssigen
Polyisocyanatgemischen der Diphenylmethanreihe während
der Lagerung bei tiefen Temperaturen.

Jetzt wurde überraschend gefunden, daß urethanmodifizierte Polyisocyanat-Zubereitungen der Art der erfin-

Le A 23 460

dungsgemäßen Verfahrensprodukte auf Basis von beliebigen organischen Polyisocyanaten, insbesondere aromatischen Polyisocyanaten und besonders bevorzugt auf Basis von Polyisocyanaten bzw. Polyisocyanatgemischen der Diphenylmethanreihe nicht nur Kompositionen mit einem erniedrigten Schmelzpunkt bzw. einer verminderten Kristallisationsneigung bei der Lagerung bei tiefen Temperaturen darstellen, sondern darüber hinaus die Herstellung von Polyurethankunststoffen, insbesondere von Polyurethan-Formkörpern mit einer homogenen Oberfläche gestatten, die sich durch sehr gute mechanische Eigenschaften, insbesondere einen guten Wärmestand, eine hohe Steifigkeit und sehr gute "green strength" bei gleichzeitig hoher Flexibilität und Bruchdehnung auszeichnen.

Als Ausgangsmaterialien a) können beim erfindungsgemäßen Verfahren beliebige organische Polyisocyanate mit einem NCO-Gehalt von 30 bis 50 Gew.-%, bzw. beliebige Gemische derartiger organischer Polyisocyanate mit einem NCO-Gehalt von 30 bis 50 Gew.-% eingesetzt werden.

Vorzugsweise werden beim erfindungsgemäßen Verfahren Polyisocyanate mit aromatisch gebundenen Isocyanatgruppen verwendet. Hierzu gehören beispielsweise 2,4-Diisocyanatotoluol, 2,6-Diisocyanatotoluol, 1,$\omega$-Bis-(isocyanatophenyl)-alkane wie z.B. 1,2-Bis-(4-isocyanatophenyl)-ethan, Alkyl-, insbesondere Methyl-substituierte Diisocyanatodiphenylmethane der beispielsweise in

Le A 23 460

EP-A 24 665 oder 46 556 beschriebenen Art und insbesondere Polyisocyanate bzw. Polyisocyanatgemische der Diphenylmethanreihe. Beliebige Gemische derartiger Polyisocyanate können beim erfindungsgemäßen Verfahren ebenfalls verwendet werden. Bei den besonders bevorzugt einzusetzenden Polyisocyanat-Gemischen der Diphenylmethanreihe handelt es sich um 4,4'-Diisocyanatodiphenylmethan, dessen Gemische mit 2,4'- und gegebenenfalls 2,2'-Diisocyanatodiphenylmethan mit einem Gehalt, bezogen auf Gesamtgemisch, an 2,4'-Diisocyanatodiphenylmethan von bis zu 70 Gew.-%, vorzugsweise bis zu 20 Gew.-%, wobei der Gehalt an 2,2'-Diisocyanatodiphenylmethan im allgemeinen 5 Gew.-% nicht übersteigt, und um Polyisocyanate, wie sie durch Phosgenierung von Anilin/Formaldehyd-Kondensaten erhalten werden, und die neben Diisocyanatodiphenylmethan-Isomeren der genannten Art unterschiedliche Mengen an höheren homologen Polyisocyanaten (im allgemeinen 5 bis 60 Gew.-%, bezogen auf Gesamtgemisch) enthalten können. Vorzugsweise werden beim erfindungsgemäßen Verfahren als Polyisocyanate derartige Polyisocyanate bzw. Polyisocyanatgemische der Diphenylmethanreihe, gegebenenfalls in Abmischung mit bis zu 50 NCO-Äquivalentprozent, bezogen auf Gesamtgemisch, an anderen aromatischen Polyisocyanaten eingesetzt. Besonders bevorzugt werden jedoch die genannten Polyisocyanate bzw. Polyisocyanatgemische der Diphenylmethanreihe als ausschließliche Polyisocyanat-Komponente beim erfindungsgemäßen Verfahren verwendet.

Le A 23 460

Bei der Ausgangskomponente b) für das erfindungsgemäße Verfahren handelt es sich um b1) bestimmte Polyacrylatpolyole der nachstehend näher beschriebenen Art oder um Gemische derartiger Polyacrylatpolyole b1) mit bis zu 250, vorzugsweise bis zu 100 Gew.-%, bezogen auf das Gewicht der Komponente b1), an b2) beliebigen Polyhydroxylverbindungen des Molekulargewichtsbereichs 62 bis 12 000 der an sich als Ausgangsmaterialien für Polyurethane bekannten Art.

Bei der Komponente b1) handelt es sich um Verbindungen des dampfdruckosmometrisch bestimmbaren Molekulargewichts von 232 bis 100 000, vorzugsweise 1 000 bis 80 000 und insbesondere 2000 bis 50 000 mit einem Hydroxylgruppengehalt von 0,017 bis 15 Gew.-%, vorzugsweise 0,1 bis 10 Gew.-% und besonders bevorzugt von 0,5 bis 5 Gew.-%. Die zum Einsatz gelangenden Polyhydroxypolyacrylate weisen vorzugsweise im statistischen Mittel pro Molekül mindestens zwei alkoholische Hydroxylgruppen auf, obwohl es im Prinzip auch möglich wäre, entsprechende Monohydroxyverbindungen einzusetzen.

Derartige Polyhydroxypolyacrylate sind bekannt, sie werden nach an sich bekannten Methoden, wie sie beispielsweise in EP-OS 68 383, DE-PS 2 460 329, GB-PS 1 515 868, US-PS 3 002 959, US-PS 3 375 227 oder DE-AS 1 038 754 beschrieben sind, erhalten. Zu ihrer Herstellung wird im allgemeinen ein Hydroxyalkylester einer ungesättigten Carbonsäure, vorzugsweise von Acryl- oder Methacrylsäure radikalisch mit sich selbst oder vorzugsweise zusammen mit anderen Hydroxylgruppen-freien ungesättigten Monomeren (co)polymerisiert.

Le A 23 460

Wie bereits ausgeführt, handelt es sich bei allen Molekulargewichtsangaben bezüglich der Hydroxylgruppen aufweisenden Polyacrylate um die beispielsweise durch Dampfdruckosmometrie bestimmbaren Zahlenmittel und nicht etwa um die beispielsweise nach der Lichtstreumethode ermittelbaren Gewichtsmittel. Die Molekulargewichte der Komponente b2) werden aus der OH-Funktionalität und dem Hydroxylgruppengehalt errechnet, mit Ausnahme der höherfunktionellen Polyesterpolyole, deren Molekulargewicht ebenfalls dampfdruckosmometrisch bestimmt wird.

Geeignete Hydroxyalkylester sind insbesondere 2 bis 8, vorzugsweise 2 bis 4 Kohlenstoffatome im Alkylrest aufweisende Ester von $\alpha,\beta$-ungesättigten Carbonsäuren mit 3 bis 5 Kohlenstoffatomen wie Acryl-, Methacryl-, Fumar-, Malein-, Itacon- oder Crotonsäure. Die entsprechenden Acryl- oder Methacrylsäureester werden bevorzugt eingesetzt. Auch Hydroxyalkylester der genannten Säuren, die Etherbrücken im Alkylrest aufweisen, sind im Prinzip geeignet, jedoch weniger bevorzugt. Zu den besonders bevorzugten Monomeren mit alkoholischen Hydroxylgruppen gehören 2-Hydroxyethyl-, 2- und 3-Hydroxypropyl-, 2-, 3- und 4-Hydroxybutylacrylat bzw. -methacrylat. Die Herstellung dieser alkoholische Hydroxylgruppen aufweisender Monomerer kann beispielsweise auch durch Umsetzung der genannten Säuren mit Epoxiden wie Ethylen- oder Propylenoxid erfolgen.

Geeignete Comonomere für die genannten, Hydroxylgruppen aufweisenden Monomeren sind beliebige Hydroxylgruppenfreie, $\alpha,\beta$-olefinisch ungesättigte Verbindungen eines zwischen 28 und 350 liegenden Molekulargewichts wie z.B. Ethylen, Propylen, Buten-1, Hexen-1, Octen-1,

Le A 23 460

Styrol, $\alpha$-Methylstyrol, Divinylbenzol, die verschiedenen isomeren Vinyltoluole, Ester von $\alpha,\beta$-ungesättigten Carbonsäuren der bereits beispielhaft genannten Art mit einwertigen aliphatischen Alkoholen mit 1 bis 18, vorzugsweise 1 bis 10 Kohlenstoffatomen, insbesondere die entsprechenden Ester der Acryl- oder Methacrylsäure wie z.B. Acrylsäuremethylester, -ethylester, -n-butylester, -n-pentylester, -n-hexylester, -2-ethylhexylester, -octadecylester bzw. die entsprechenden Methacrylsäureester.

Weitere geeignete Comonomere sind neutrale Ester mehrbasischer Carbonsäuren wie z.B. Itaconsäure-, Crotonsäure-, Maleinsäure- oder Fumarsäureester der beispielhaft genannten einwertigen Alkohole.

Weitere geeignete Comonomere sind Acrylsäure oder Methacrylsäure, Vinylacetat, Acrylnitril oder Methacrylnitril, ferner Diene wie Isopren oder Butadien. Auch Vinylchlorid kann im Prinzip als Comonomeres eingesetzt werden.

Besonders bevorzugte Ausgangsmaterialien b1) sind Hydroxyalkylpolyacrylate, die aus 10 bis 50 Gew.-Teilen eines Hydroxyalkylesters der Acrylsäure oder Methacrylsäure, 0 bis 80 Gew.-Teilen Styrol und/oder $\alpha$-Methylstyrol, 10 bis 90 Gew.-Teilen eines Hydroxylgruppen-freien Acrylsäureesters und/oder Methacrylsäureesters der beispielhaft genannten Art und 0 bis 5 Gew.-Teilen einer $\alpha,\beta$-ungesättigten Mono- oder Dicarbonsäure der beispielhaft genannten Art, insbesondere Acrylsäure oder Methacrylsäure aufgebaut sind.

Die als Komponente b1) verwendeten Polyhydroxypolyacrylate können jedoch auch nach anderen Verfahren herge-

Le A 23 460

stellt werden, beispielsweise durch Alkoxylierung der entsprechenden, Carboxylgruppen aufweisenden Polyacrylate, wobei als Alkoxylierungsmittel vorzugsweise Ethylenoxid und/oder Propylenoxid eingesetzt werden. Diese Alkoxylierungsreaktion wird in Gegenwart bekannter Alkoxylierungskatalysatoren, beispielsweise in Gegenwart von Tetrabutylammoniumbromid durchgeführt. Die bei dieser Alkoxylierungsreaktion einzusetzenden, Carboxylgruppen aufweisenden Polyacrylate werden durch Copolymerisation von ungesättigten Carbonsäuren wie z.B. Acrylsäure und/oder Methacrylsäure mit Hydroxyl- und Carboxylgruppen-freien Comonomeren der oben beispielhaft genannten Art in an sich bekannter Weise erhalten.

Wie bereits oben angedeutet, weisen die Polyhydroxypolyacrylate vorzugsweise pro Molekül mindestens zwei Hydroxylgruppen auf. Es ist jedoch auch zu beachten, daß ihre Hydroxylfunktionalität nicht so hoch liegt, daß beim erfindungsgemäßen Verfahren, durch Vernetzungsreaktionen hervorgerufene, Gelierungen des Reaktionsansatzes stattfinden. Im allgemeinen sollte daher die mittlere Hydroxylfunktionalität der Polyhydroxypolyacrylate bei einem mittleren Molekulargewicht von weniger als 1000 bei maximal 5, vorzugsweise maximal 3, bei einem Molekulargewicht von weniger als 10 000 und höher als 1000 bei maximal 25, vorzugsweise maximal 10 und auch über 10 000 liegenden mittleren Molekulargewichten nicht über 100, vorzugsweise nicht über 20 liegen. Im Falle der Verwendung von Polyhydroxypolyacrylaten mit vergleichsweise hohen Hydroxylfunktionalitäten innerhalb der genannten Bereiche muß gleichzeitig durch Verwendung eines hohen Isocyanatüberschusses bei der Herstellung der erfindungsgemäßen Polyisocyanat-Zubereitungen dafür Sorge getragen werden, daß es zu den genannten, durch Vernetzungsreaktionen hervorgerufenen

Le A 23 460

Gelierungen des Ansatzes nicht kommen kann. Bei einem
vorgegebenen Polyhydroxypolyacrylat, dessen Hydroxylfunktionalität sich als zu hoch erweist, kann diese
Hydroxyfunktionalität auf einfache Weise durch eine
geeignete chemische Reaktion, beispielsweise durch eine
Acylierung, insbesondere Acetylierung eines Teils der
Hydroxylgruppen, beispielsweise durch Reaktionen mit
Essigsäureanhydrid oder durch Urethanisierung eines Teils
der Hydroxylgruppen beispielsweise durch Reaktion mit
einem Monoisocyanat wie z.B. Phenylisocyanat oder Hexylisocyanat den jeweiligen Bedürfnissen angepaßt werden.
Eine derartige Kontrolle und gegebenenfalls Reduzierung
der Hydroxylfunktionalität der Polyhydroxypolyacrylate
ist insbesondere auch dann von Vorteil, wenn sich die
Komponente b) vor allem aus Polyhydroxypolyacrylaten
b1) zusammensetzt, und wenn die erfindungsgemäßen Verfahrensprodukte als einzige oder überwiegende Isocyanatkomponente zur Herstellung von elastomeren Polyurethanen oder Polyurethanpolyharnstoffen verarbeitet
werden sollen, da andernfalls, selbst wenn die erfindungsgemäßen Verfahrensprodukte noch nicht gelieren,
ihre Funktionalität für den genannten Einsatzzweck zu
hoch ist, so daß leicht übervernetzte und spröde Kunststoffe resultieren, die insbesondere eine zu geringe
Weiterreißfestigkeit aufweisen.

Bei der gegebenenfalls beim erfindungsgemäßen Verfahren mitzuverwendenden Komponente b2) handelt es
sich um die an sich bekannten Polyhydroxylverbindungen
der Polyurethanchemie, d.h. insbesondere um solche
Polyhydroxylverbindungen, wie sie gemäß den obengenannten Veröffentlichungen zur Modifizierung von Polyisocyanaten der Diphenylmethanreihe bereits eingesetzt worden sind, verwendet werden. Geeignete Polyhydroxylverbin-

Le A 23 460

dungen b2), die gegebenenfalls in Kombination mit den erfindungswesentlichen Polyhydroxylverbindungen b1) bei der
Durchführung des erfindungsgemäßen Verfahrens eingesetzt werden können, sind somit beispielsweise einfache,
bevorzugt Ethergruppen aufweisende Glykole des (mittleren) Molekulargewichts 62 bis 700 wie z.B. Ethylenglykol, 1,2-Dihydroxypropan, 1,4-Dihydroxybutan, Polyethylenglykole und insbesondere Polypropylenglykole des
genannten Molekulargewichtsbereichs oder auch lineare
oder verzweigte Polyetherpolyole eines zwischen 700 und
12 000, vorzugsweise 2000 und 6000 liegenden Molekulargewichts wie z.B. die entsprechenden Alkoxylierungsprodukte geeigneter niedermolekularer Startermoleküle
wie z.B. den soeben genannten einfachen Glykolen oder
von geeigneten höherfunktionellen Startermolekülen wie
z.B. Glycerin oder Trimethylolpropan. Gut geeignete
Ausgangskomponenten b2) sind auch die aus der Polyurethanchemie an sich bekannten Polyesterpolyole eines
dampfdruckosmometrisch bestimmbaren Molekulargewichts
von 700 bis 12 000, vorzugsweise 2000 bis 6000, wie
sie in an sich bekannter Weise durch Umsetzung von
organischen Carbonsäuren bzw. Carbonsäuregemischen
mit überschüssigen Mengen an organischen Hydroxylverbindungen bzw. Gemischen organischer Hydroxylverbindungen erhalten werden können. Beispiele geeigneter
Carbonsäuren bei der Herstellung der Polyesterpolyole
sind insbesondere Dicarbonsäuren wie Adipinsäure,
Phthalsäure, Hexahydrophthalsäure oder Maleinsäure
bzw. die Anhydride dieser Säuren, wobei auch geringe
Mengen an monofunktionellen Carbonsäuren wie z.B.
technischen oder natürlichen Fett- oder Ölsäuren
oder auch Benzoesäure mitverwendet werden können.

Le A 23 460

Beispiele geeigneter mehrwertiger Alkohole sind die bereits obengenannten einfachen Glykole, jedoch können auch höherfunktionelle Alkohole wie z.B. Glycerin, Trimethylolpropan oder Pentaerythrit (mit)verwendet werden. Bei der Herstellung der Polyesterpolyole ist lediglich darauf zu achten, daß die mittlere Carboxyl- und Hydroxylfunktionalität aller Ausgangsmaterialien bei mindestens zwei liegt, so daß bei der Herstellung der Polyesterpolyole kein unerwünschter Kettenabbruch stattfindet. Selbstverständlich können beliebige Gemische der beispielhaft genannten Verbindungen als Komponente b2) beim erfindungsgemäßen Verfahren eingesetzt werden. Bezüglich der Hydroxylfunktionalität der Komponente b2) gelten die oben im Zusammenhang mit der Komponente b1) gemachten Ausführungen sinngemäß. Die gegebenenfalls beim erfindungsgemäßen Verfahren mitzuverwendende Komponente b2) kann beim erfindungsgemäßen Verfahren in Mengen von bis zu 250 Gew.-%, vorzugsweise bis zu 100 Gew.-%, bezogen auf das Gewicht der Komponente b1), mitverwendet werden.

Gemäß einer besonderen Ausführungsform des erfindungsgemäßen Verfahrens erfolgt die Herstellung der Komponente b) d.h. des Gemischs aus den Komponenten b1) und b2) in situ dergestalt, daß die Polymerisationsreaktion zur Bildung der Komponente b1) in der Komponente b2) als Reaktionsmedium durchgeführt wird, wobei hier ebenso wie bei der isolierten Herstellung der Komponente b1) selbstverständlich inerte Lösungsmittel mitverwendet werden können.

Le A 23 460

Zu den gegebenenfalls beim erfindungsgemäßen Verfahren
mitzuverwendenden Hilfs- und Zusatzmitteln c) gehören
insbesondere c1) bei Raumtemperatur flüssige, in dem
Reaktionsgemisch lösliche oder mit diesem verträgliche,
gegenüber Isocyanatgruppen inerte Polymerisate oder Copolymerisate von olefinisch ungesättigten Monomeren des
dampfdruckosmometrisch bestimmbaren Molekulargewichts
200 bis 50 000, vorzugsweise 2000 bis 30 000, die im
allgemeinen bei 100°C eine Viskosität von 1 bis 200 Pa.s
aufweisen. Es handelt sich bei diesen Polymerisaten oder
Copolymerisaten um Substanzen bzw. Substanzgemische der
in der EP-OS 102 007 als Komponente e1) beschriebenen
Art. Jedoch können auch lösliche Polystyrolverbindungen
als gegebenenfalls beim erfindungsgemäßen Verfahren mitzuverwendende Komponente c1) eingesetzt werden.

Die gegebenenfalls mitzuverwendende Komponente c1)
kann beim erfindungsgemäßen Verfahren in Mengen von
bis zu 250 Gew.-%, vorzugsweise bis zu 100 Gew.-%, bezogen auf das Gewicht der Komponente b1) mitverwendet
werden.

Weitere, beim erfindungsgemäßen Verfahren gegebenenfalls mitzuverwendende Hilfs- und Zusatzmittel sind
beispielsweise c2) gegenüber Isocyanatgruppen inerte
Lösungsmittel wie z.B. Toluol, n-Hexan, n-Heptan,
beliebige Lösungsbenzine, Ethylacetat, Butylacetat,
Ethylenglykol-monomethylether-acetat oder Ethylenglykol-monoethylether-acetat bzw. beliebige Gemische
derartiger Lösungsmittel.

Le A 23 460

Derartige Lösungsmittel können in Mengen von bis zu 200 Gew.-%, bezogen auf das Gewicht der Komponente b1), mitverwendet werden. Falls solche Lösungsmittel mitverwendet werden, werden sie vorzugsweise im Anschluß an die erfindungsgemäße Umsetzung destillativ aus dem Reaktionsgemisch entfernt.

Weitere, gegebenenfalls beim erfindungsgemäßen Verfahren mitzuverwendende Hilfs- und Zusatzmittel c) sind beispielsweise c3) einwertige Alkohole wie z.B. Ethanol, n-Hexanol, n-Dodecanol oder, jedoch weniger bevorzugt, einwertige Carbonsäuren wie z.B. Benzoesäure oder Stearinsäure. Derartige monofunktionelle Verbindungen können dann mitverwendet werden, wenn die Funktionalität der Ausgangsmaterialien herabgesetzt werden soll, um den Verzweigungsgrad der resultierenden Verfahrensprodukte in Grenzen zu halten. Das gleiche Ergebnis kann im Prinzip auch dadurch erzielt werden, daß man erst bei der Durchführung des erfindungsgemäßen Verfahren einwertige, dann ebenfalls der Gruppe c3) zuzuordnenden Isocyanate der oben bereits beispielhaft genannten Art mitverwendet. Vorzugsweise erfolgt jedoch der Einsatz dieser monofunktionellen Isocyanate, falls er überhaupt erforderlich ist, bereits vor der Durchführung des erfindungsgemäßen Verfahrens durch eine vorab vorgenommene teilweise Urethanisierung der Hydroxylgruppen der Komponente b1). Grundsätzlich kann gesagt werden, daß die Mitverwendung der beispielhaft genannten Hilfs- und Zusatzmittel c3) weniger bevorzugt ist. Falls diese Hilfsmittel jedoch mitverwendet werden, wird ihre Menge vorteilhaft durch einen orientierenden Vorversuch bestimmt.

Le A 23 460

Bei der Durchführung des erfindungsgemäßen Verfahrens kommen die Reaktionspartner im übrigen in solchen Mengen zum Einsatz, die einem Äquivalentverhältnis von Isocyanatgruppen der Komponente a) und gegebenenfalls c3) zu Hydroxylgruppen der Komponente b) (Summe aus b1) und b2)) und gegebenenfalls der Komponente c3) von mindestens 1,8:1, vorzugsweise 2:1 bis 50:1 entsprechen.

Das erfindungsgemäße Verfahren wird im allgemeinen innerhalb des Temperaturbereichs von 20-140°C, vorzugsweise 40-120°C durchgeführt. Die Umsetzung erfolgt im allgemeinen durch Zusammengeben der Reaktionspartner bei Raumtemperatur und anschließendes Aufheizen auf maximal 140°C, vorzugsweise 40-100°C, bis der berechnete NCO-Gehalt erreicht ist.

Die resultierenden Urethangruppen aufweisenden Polyisocyanat-Zubereitungen stellen im allgemeinen sogenannte Semiprepolymere dar, d.h. Gemische von nicht umgesetzten Ausgangspolyisocyanaten mit urethanmodifizierten NCO-Prepolymeren. Lediglich bei Verwendung von niedrigen NCO:OH-Äquivalentverhältnissen innerhalb der obengenannten Bereiche entstehen beim erfindungsgemäßen Verfahren praktisch ausschließlich echte NCO-Prepolymere, die nur noch sehr geringe Mengen an nicht umgesetztem Ausgangspolyisocyanat enthalten. Der NCO-Gehalt der erfindungsgemäßen Verfahrensprodukte liegt in Abhängigkeit von Art und Mengenverhältnis der Ausgangsmaterialien innerhalb der breiten obengenannten Grenzen.

Le A 23 460

0190560

Bei Verwendung der bevorzugten Polyisocyanate bzw. Polyisocyanatgemische der Diphenylmethanreihe entstehen im
allgemeinen Verfahrensprodukte mit einem NCO-Gehalt von
0,5 bis 45 Gew.-%, bevorzugt 5 bis 30, insbesondere
bevorzugt 18 bis 28 Gew.-%.

Die erfindungsgemäßen Verfahrensprodukte weisen im allgemeinen einen im Vergleich zum entsprechenden Ausgangspolyisocyanat erniedrigten Schmelzpunkt auf. Sie können
vorteilhaft, gegebenenfalls im Gemisch mit anderen
Polyisocyanaten der aus der Polyurethanchemie an sich
bekannten Art zur Herstellung von Polyurethankunststoffen eingesetzt werden. Besonders vorteilhaft werden die erfindungsgemäßen Verfahrensprodukte als gegebenenfalls anteilig zu verwendende Polyisocyanatkomponente bei der Herstellung von Formkunststoffen nach
der "RIM-Technologie" verwendet und zwar sowohl zur
Herstellung von harten, halbharten und weichen Integralformstoffen als auch zur Herstellung der entsprechenden massiven, d.h. allenfalls mikrozellularen Formkörper einer zwischen 0,8 und 1,4, vorzugsweise
0,9 bis 1,2 g/cm$^3$ liegenden Rohdichte.

Bei dieser bevorzugten erfindungsgemäßen Verwendung der
erfindungsgemäßen Verfahrensprodukte werden diese, gegebenenfalls in Abmischung mit anderen Polyisocyanaten
des Standes der Technik, als Polyisocyanatkomponente im
Sinne einer Einstufenreaktion mit einer "Polyolkomponente"
in an sich bekannter Weise zur Reaktion gebracht, wobei
die "Polyolkomponente" mindestens eine Verbindung mit
einem Molekulargewicht zwischen 400 und 12 000, welche

Le A 23 460

mindestens zwei gegenüber Isocyanatgruppen reaktionsfähige Gruppen aufweist, und gegebenenfalls mindestens eine Verbindung mit einem Molekulargewicht zwischen 32 und 399 mit mindestens 2, vorzugsweise 2, gegenüber Isocyanatgruppen reaktionsfähigen Gruppen und gebenenfalls den aus der Polyurethanchemie an sich bekannten Hilfs- und Zusatzstoffen besteht. Die Umsetzung erfolgt in völliger Analogie zu den Verfahren, wie sie beispielsweise in US-PS 4 218 543 oder US-PS 4 065 410 beschrieben sind.

Durch die erfindungsgemäße Maßnahme der Verwendung bzw. Mitverwendung der erfindungsgemäßen Verfahrensprodukte als Polyisocyanatkomponente oder als Teil der Polyisocyanatkomponente wird erreicht, daß die resultierenden Formkörper eine verbesserte, d.h. homogenere Oberflächenbeschaffenheit im Vergleich zu entsprechenden Formkörpern, die ohne Mitverwendung der erfindungsgemäßen Verfahrensprodukte hergestellt worden sind, aufweisen. Dies ist insbesondere von großer praktischer Bedeutung, wenn die unter Verwendung der erfindungsgemäßen Verfahrensprodukte als Polyisocyanatkomponente hergestellten, elastomeren Formkörper mit geschlossener Außenhaut in an sich bekannter Weise als Karosserieelemente von Automobilen oder für den Innenausbau von Automobilen oder auch zur Herstellung von Fahrrad- oder Motorradsätteln oder von Beschichtungen und Flächengebilden verwendet werden.

Die erfindungsgemäßen Verfahrensprodukte können selbstverständlich auch bei der Herstellung von anderen Poly-

Le A 23 460

urethankunststoffen, beispielsweise bei der Herstellung von freiverschäumten harten, halbharten oder weichen Polyurethanformstoffen vorteilhaft als Polyisocyanatkomponente anstelle oder in Abmischung mit den bislang hierfür eingesetzten Polyisocyanaten verwendet werden.

Die mit den erfindungsgemäßen Verfahrensprodukten hergestellten Polyurethankunststoffe zeichnen sich durch ausgezeichnete mechanische Eigenschaften aus. Sie können grundsätzlich für die gleichen Anwendungsgebiete wie die Polyurethankunststoffe des Standes der Technik verwendet werden.

In den nachfolgenden Beispielen beziehen sich alle Prozentangaben auf Gewichtsprozente und alle Angaben in Teilen auf Gewichtsteile. Die Molekulargewichte wurden dampfdruckosmometrisch bestimmt.

Le A 23 460

Beispiele

In den nachfolgenden Beispielen werden als "Polymere" bezeichnete Polyhydroxylverbindungen eingesetzt. Es handelt sich hierbei entweder um reine Polyhydroxypolyacrylate, wie sie bei der Copolymerisation der weiter unten angegebenen Monomeren anfallen (Polymere I, II, III und IV); um Modifizierungsprodukte derartiger Copolymerisate (Polymere V und VI); um ein in Gegenwart eines Polyesterpolyols in situ hergestelltes Gemisch eines Polyhydroxypolyacrylats mit dem Polyesterpolyol (Polymer VII) bzw. um Gemische aus einfachen Poly- hydroxypolyacrylaten mit separat hergestellten Poly- esterpolyolen (Polymere VIII und IX). Alle Prozentangaben der Hydroxylgruppengehalte beziehen sich jeweils auf den Feststoff.

Die Herstellung der reinen Polyhydroxypolyacrylate II, III und IV erfolgte unter Verwendung der nachstehend aufgeführten Monomeren nach der nachfolgenden Herstellungsmethode für Polymer I:

Herstellung von Polymer I

In einem sauerstofffreien 40 l-Autoklaven werden 6,13 kg Xylol und 6,52 kg Ethylglykolacetat (EGA) vorgelegt und auf 140°C erwärmt. Bei dieser Temperatur wird eine Mischung von 2,0 kg Hydroxyethylmethacrylat, 8,3 kg Methacrylsäuremethylester, 2,5 kg 2-Ethylhexylacrylat, 130 g Acrylsäure und 130 g Di-t-butylperoxid innerhalb von 4 h gleichmäßig unter Luftausschluß zudosiert. Zur Nachaktivierung werden 36 g Di-t-butylperoxid in 400 g

Le A 23 460

Xylol zugegeben. Man rührt ca. 7 h bei 140°C nach und entfernt anschließend destillativ im Wasserstrahlvakuum flüchtige Restmonomere, insbesondere Methylmethacrylat, sowie geringe Mengen des Lösungsmittelgemischs. Es resultiert eine 50 gew.-%ige Lösung von Polymer I in EGA/Xylol (1:1) mit einem Hydroxylgruppengehalt von 2,0 % und einem mittleren Molekulargewicht von 10 000.

Herstellung von Polymer V:

In einem sauerstofffreien 40 l-Atuoklaven wird eine Mischung aus 5 kg Xylol und 1,25 kg Ethylglykolacetat vorgelegt und unter Rühren auf 140°C erhitzt. Innerhalb von jeweils 4 h wird a) eine Mischung aus 3.720 g Acrylsäure, 6000 g Styrol, 3000 g Methylmethacrylat und 1940 g 2-Ethylhexylacrylat, sowie b) eine Mischung aus 600 g Di-t-butylperoxid und 4000 g Ethylglykolacetat eindosiert. Nacheinander werden dann schnell c) ein Gemisch aus 100 g Ethylglykolacetat und 30 g Di-t-butylperoxid und d) ein Gemisch aus 15 g Tetrabutylammoniumbromid (Katalysator für die Propoxylierungsreaktion) und 1500 g Ethylglykolacetat zugegeben. Schließlich werden innerhalb 1 h 3147 g Propylenoxid und zum Schluß noch 650 g Ethylglykolacetat eindosiert. Das so erhaltene Reaktionsgemisch wird während 6 h bei 140°C nachgerührt, dann werden 0,5 l Lösungsmittel und Restmonomere abdestilliert. Nach Abkühlen liegt eine 60 %ige Lösung von Polymer V in Xylol/Ethylglykolacetat (Gewichtsverhältnis = 2:3) vor. Das gelöste Polymer V weist einen Hydroxylgruppengehalt von 5,2 % (Festharz) bei einem mittleren Molekulargewicht von 2700 auf.

Die Herstellung von Polymer VII erfolgte nach folgender
Vorschrift:

In einem sauerstofffreien 40 l-Autoklaven wird ein Gemisch aus 8,5 kg Xylol und 6,1 kg eines Polyesterpolyols des Molekulargewichts 1800 und der OH-Zahl 170, bei
dem es sich um das Veresterungsprodukt aus 19 Teilen
2-Ethylhexansäure, 10 Teilen Phthalsäureanhydrid, 20
Teilen Hexahydrophthalsäure und 10 Teilen Adipinsäure
mit 42 Teilen Trimethylolpropan handelt, vorgelegt und
unter Rühren auf 135°C erhitzt. Innerhalb von 4 h wird
eine monomere Mischung, bestehend aus 3537 g 2-Hydroxypropyl-methacrylat, 5883 g Styrol, 988 g 2-Ethylhexylacrylat und 53 g Acrylsäure zudosiert. Gleichzeitig
wird separat während des gleichen Zeitraums eine Lösung
von 213 g Di-t-butylperoxid in 4 kg Xylol eindosiert.
Nach 4 h wurde mit einer Mischung aus 667 g Xylol und
17 g Di-t-butylperoxid nachaktiviert. Schließlich wird
während weiterer 6 h bei 135°C nachgerührt, dann bei
reduziertem Druck 500 ml Toluol abgezogen und durch
500 ml frisches Xylol ersetzt. Es entsteht eine 51 %ige
Lösung von Polymer VII in Xylol mit einem Hydroxylgruppengehalt von ca. 4,6 %.

Polymer II (Herstellung entsprechend Polymer I):

Copolymerisat aus 50 Teilen 2-Hydroxypropylmethacrylat,
20 Teile Styrol, 18 Teilen Methylmethacrylat, 6 Teile
2-Ethylhexylacrylat und 1 Teil Acrylsäure. Mittleres
Molekulargewicht: 1000; Hydroxylgruppengehalt: 6,1 %.
Es liegt eine 60 %ige Lösung des Polymer II in EGA/
Xylol (1:3) vor.

Le A 23 460

Polymer III (Herstellung entsprechend Polymer I):

Copolymerisat aus 38 Teilen 2-Hydroxypropylmethacrylat, 20 Teilen Styrol, 22 Teilen Methylmethacrylat, 18 Teilen n-Butylacrylat und 2,0 Teilen Acrylsäure; Lösungsmittel: nur Xylol. Mittleres Molekulargewicht: ca. 700; Hydroxylgruppengehalt: 4,4 % (71 %ige Lösung in Xylol).

Polymer IV (Herstellung entsprechend Herstellungsvorschrift für Polymer I):

Copolymerisat aus 19 Teilen 2-Hydroxypropylmethacrylat, 49 Teilen Styrol, 2 Teilen Methylmethacrylat, 32 Teilen n-Butylacrylat und 2 Teilen Acrylsäure; Lösungsmittel: nur Solventnaphtha; 60 %ige Lösung. Mittleres Molekulargewicht: ca. 2000; Hydroxylgruppengehalt: 2,67 %.

Polymer VI (Herstellung entsprechend Polymer V):

Copolymerisat aus 25 Teilen Acrylsäure, 10 Teilen Methylmethacrylat, 30 Teilen Styrol und 9 Teilen 2-Ethxlhexylacrylat, verestert mit 22 Teilen Propylenoxid; Lösungsmittel: nur EGA. Mittleres Molekulargewicht: 4000; Hydroxylgruppengehalt: 6,0 %. Es liegt eine 60 %ige Lösung in EGA vor.

Polymer VIII:

Gemisch aus einem Polyhydroxypolyacrylat und einem Polyesterpolyol.

Le A 23 460

Das Polyesterpolyol stellt das Umsetzungsprodukt von 20 Teilen eines technischen Fettsäuregemischs des mittleren Molekulargewichts 300, 20 Teilen Benzoesäure, 1,5 Teilen Maleinsäureanhydrid und 29,5 Teilen Phthalsäureanhydrid mit 14 Teilen Trimethylolpropan und 15 Teilen Pentaerythrit dar. Das Polyesterpolyol weist ein mittleres Molekulargewicht von 1200 bei einer Hydroxylzahl von 200 und einer Säurezahl von 21 auf.

Bei dem Polyhydroxypolyacrylat handelt es sich um ein Copolymerisat, welches entsprechend der Herstellungsvorschrift für Polymer I aus 10 Teilen 2-Hydroxypropylmethacrylat, 21 Teilen Styrol, 6 Teilen n-Butylacrylat und 0,5 Teilen Acrylsäure in Gegenwart von 23 Teilen Xylol hergestellt worden ist. Das Copolymerisat weist, bezogen auf Feststoff, einen Hydroxylgruppengehalt von 3,5 % auf. Bei Polymer VIII handelt es sich um ein Gemisch des Polyesterpolyols mit dem Polyhydroxypolyacrylat im Mischungsverhältnis 3:2.

Polymer IX:

Es handelt sich ebenfalls um ein Gemisch eines Polyhydroxypolyacrylats mit einem Polyesterpolyol. Das Mischungsverhältnis Polyacrylat:Polyesterpolyol liegt bei ca. 3:2.

Bei dem Polyesterpolyol handelt es sich um das Umsetzungsprodukt von 28 Teilen Phthalsäureanhydrid, 10 Teilen Adipinsäure, 21 Teilen 2-Ethylhexansäure und 2 Teilen Maleinsäure mit 39 Teilen Trimethylolpropan. Das

Le A 23 460

Polyesterpolyol weist ein mittleres Molekulargewicht von ca. 1500 und eine Hydroxylzahl von 165 auf.

Bei dem Polyhydroxypolyacrylat handelt es sich um ein gemäß Polymer I hergestelltes Copolymerisat aus 19 Teilen 2-Hydroxyethylmethacrylat, 24 Teilen Styrol, 15 Teilen n-Butylacrylat und 0,5 Teilen Acrylsäure. Die Herstellung des Copolymerisats erfolgte in Gegenwart von 24 Teilen eines Gemischs aus Xylol und Ethylglykolacetat (Gewichtsverhältnis = 2:1). Das Copolymerisat weist, bezogen auf Feststoff, einen Hydroxylgruppengehalt von 4,2 % und ein mittleres Molekulargewicht von 1500 auf.

Beispiel 1

94,5 g einer 51 %igen Lösung von Polymer VII in Xylol und 400 g eines Polyisocyanatgemischs der Diphenylmethanreihe, bestehend aus 83 % 4,4'-Diisocyanatodiphenylmethan, 7 % 2,4'-Diisocyanatodiphenylmethan und 10 % höherfunktionellen Polyisocyanaten (NCO-Gehalt des Gemischs: 32,2 %) werden während 4 h bei 80°C gerührt und dann bei 100°C/1,3 mbar destillativ vom Lösungsmittel befreit.

Es resultiert ein niedrigviskoses NCO-Semiprepolymer mit einem NCO-Gehalt von 26,2 %, einer Viskosität bei 25°C von 289 mPas und einem Erstarrungsbereich von -15 bis -10°C. Der gaschromatographisch bestimmte Restgehalt an Xylol liegt bei 0,039 %.

Le A 23 460

Beispiel 2

72 g einer 60 %igen Lösung von Polymer II in einem
Lösungsmittelgemisch aus Ethylglykolacetat und Xylol
(Gewichtsverhältnis = 1:3) werden mit 400 g des in
Beispiel 1 genannten Polyisocyanatgemischs vermischt
und während 4 h bei 80°C gerührt. Anschließend wird
das Lösungsmittel bei 100°C/1,3 mbar destillativ entfernt.

Es resultiert ein niedrigviskoses NCO-Semiprepolymer
mit einem NCO-Gehalt von 26 %, einer Viskosität bei
25°C von 260 mPa.s, einem Erstarrungspunkt von ca.
-8°C und einem Restgehalt an Lösungsmitteln von 0,35 %.

Beispiel 3

72 g einer 60 %igen Lösung von Polymer VI in Ethylglykolacetat werden mit 400 g des in Beispiel 1 verwendeten Polyisocyanatgemischs vermischt und 4 h bei 80°C
gerührt. Das Lösungsmittel wird bei 100°C/1,3 mbar abdestilliert.

Es resultiert ein niedrigviskoses NCO-Semiprepolymer
mit einem NCO-Gehalt von 26,6 %, einer Viskosität bei
25°C von 350 mPa.s, einem Erstarrungspunkt von ca. -10°C
und einem gaschromatographisch bestimmten Restgehalt
an Ethylglykolacetat von 1,28 %.

Le A 23 460

Beispiel 4

74 g einer 71 %igen Lösung von Polymer III in Xylol werden mit 400 g des in Beispiel 1 verwendeten Polyisocyanatgemischs vermischt und 4 h bei 80°C gerührt. Das Lösungsmittel wird bei 100°C/1,3 mbar abdestilliert.

Es hinterbleibt ein niedrigviskoses NCO-Semiprepolymer mit einem NCO-Gehalt von 25,9 %, einer Viskosität 25°C von 410 mPa.s, einem Erstarrungspunkt von ca. -14°C und einem gaschromatographisch bestimmten Restgehalt an Xylol von 0,01 %.

Beispiel 5

80 g einer 60 %igen Lösung von Polymer V in Xylol/ Ethylglykolacetat (2:3) und 400 g des in Beispiel 1 genannten Polyisocyanatgemischs wurden miteinander vermischt und 4 h bei 80°C verrührt. Das Lösungsmittel wird bei 100°C/ 1,3 mbar abdestilliert.

Es hinterbleibt ein niedrigviskoses NCO-Semiprepolymer mit einem NCO-Gehalt von 25,9 %, einer Viskosität 25°C von 336 mPa.s, einem Erstarrungspunkt von -17°C und einem Restgehalt an Lösungsmittel von 0,78 %.

Beispiel 6

a)   1000 g einer 60 %igen Lösung von Polymer IV in Solventnaphtha 100 (aromatisches Kohlenwasserstoff-

Le A 23 460

lösungsmittelgemisch) und 4000 g des in Beispiel 1 erwähnten Polyisocyanatgemischs werden vereinigt und 4 h bei
80°C gerührt. Das Lösungsmittel wird bei 100°C/1,3 mbar
abdestilliert.

Es hinterbleibt ein niedrigviskoses NCO-Semiprepolymer
mit einem NCO-Gehalt von 26,2 %, einer Viskosität von
bei 25°C von 260 mPa.s, einem Erstarrungspunkt von -17°C
und einem gaschromatographisch festgestellten Gehalt an
Solventnaphtha 100 von 5,11 %.

Beispiel 7

104 g einer 60 %igen Lösung aus Polymer VIII in Xylol werden mit 400 g des in Beispiel 1 genannten Polyisocyanats
vermischt und 4 h bei 80°C verrührt. Danach wird bei
100°C/1,3 mbar das Solvens abdestilliert.

Es hinterbleibt ein niedrigviskoses NCO-Semiprepolymer
mit einem NCO-Gehalt von 25,4 %, einer Viskosität bei
25°C von 382 mPa.s, einem Erstarrungspunkt von ca. -7°C
und einem gaschromatographisch festgestellten Restgehalt
an Xylol von 0,16 %.

Beispiel 8

100 g einer 60 %igen Lösung von Polymer IX in einem
2:1-Gemisch aus Xylol und Ethylglykolacetat wird mit
400 g des in Beispiel 1 genannten Polyisocyanatgemischs
vermischt und 4 h bei 80°C gerührt. Danach wird das
Lösungsmittel abdestilliert (100°C/1,3 mbar).

Le A 23 460

Es resultiert ein niedrigviskoses NCO-Semiprepolymer mit einem NCO-Gehalt von 23,6 %, einem Erstarrungspunkt von -11°C, einer Viskosität bei 25°C von 510 mPa.s und gaschromatographisch festgestellten Restgehalten an Xylol von 0,059 % und an Ethylglykolacetat von 0,73 %.

Beispiel 9

2870 g einer 50 gew.-%igen Lösung von Polymer I in EGA/Xylol 1:1 werden mit 8151 g des in Beispiel 1 genannten Polyisocyanatgemischs vereinigt und 3 h bei 80°C gerührt.

Nach dem Abdestillieren des Lösungsmittels (90°C/1,3 mbar) hinterbleibt ein niedrigviskoses NCO-Semiprepolymer mit einem Gehalt an NCO-Gruppen von 22,9 %, einer Viskosität bei 25°C von 518 mPa.s, einem Erstarrungspunkt von ca. 10°C und gaschromatographisch festgestellten Restgehalten an Xylol von 0,054 % und an Butylacetat von 0,28 %.

Beispiel 10

167 g der 60 %igen Lösung von Polymer IV in Solventnaphtha werden mit 351 g Isophorondiisocyanat vereinigt und 4 h bei 80°C gerührt.

Nach dem Abdestillieren des Xylols bei 80°C/1 Torr resultiert ein farbloses mittelviskoses NCO-Semiprepolymer mit einem NCO-Gehalt von 27,6 %, einer Viskosität bei 25°C von 2500 mPa.s, einem Erstarrungspunkt von -13°C und einem gaschromatographisch bestimmten Restgehalt an Solventnaphtha von 0,75 %.

Le A 23 460

Beispiel 11

250 g der in Beispiel 10 genannten Lösung von Polymer IV
werden mit 291 g 4,4'-Diisocyanatodiphenylmethan vereinigt
und 4 h bei 40°C gerührt.

Nach dem Abdestillieren des Solvens bei 100°C/1 Torr
hinterbleibt ein bei Raumtemperatur gerade noch
fließfähiges, hochviskoses NCO-Semiprepolymer des
NCO-Gehaltes 19,2 % mit einem Erstarrungspunkt von
+19°C, einer Viskosität bei 25°C von 24200 mPa.s
und einem gaschromatographisch festgestellten Rest-
Solventnaphtha-Gehalt von 0,63 %.

Beispiel 12 (Verwendungsbeispiel)

Rezeptur: 1.   190 Teile eines Polyethers der OH-Zahl 27,
hergestellt durch Propoxylierung
von Trimethylolpropan und anschließende
Ethoxylierung des Propoxylierungsprodukts (Gew.-Verhältnis PO:EO = 78:22)

2.   47 Teile Ethylenglykol

3.   15 Teile Dichlormethan

4.   0,15 Teile eines handelsüblichen Zinnkatalysators (Ul 1 der Firma Witco Co.)

5.   0,2 Teilen Triethylendiamin

6.   266 Teilen eines Gemischs aus (i) 90 Teilen
eines NCO-Prepolymeren mit einem NCO-
gehalt von 24,5 % aus dem Polyiso-

Le A 23 460

cyanatgemisch gemäß Beispiel 1 und
Dipropylenglykol und (ii) 10 Teilen
des Semiprepolymeren gemäß Beispiel 7.

Die Komponenten 1 bis 5 wurden zu einer "Polyolkomponente" vereinigt und innerhalb 9 Sekunden maschinell mit der unter 6. genannten Polyisocyanatkomponente vermischt. Die Rohstofftemperaturen betrugen 25°C. Die mischung wurde maschinell in eine Stahlform der Innenabmessung 20 x 20 x 1 cm bei einer Formtemperatur von 60°C eingespritzt und aushärten gelassen. Die Innenwände der geschlossenen Form waren vorab mit einem äußeren Trennmittel auf Wachsbasis (Trennmittel P 180 der Firma Acmos) beschichtet worden.

Nach einer Formstandzeit von 180 Sekunden konnte ein Formkörper der Shore D Härte von 63 mit einer sehr guten "green strength" und einer glatten, glänzenden Oberfläche entformt werden.

Beispiel 13 (Verwendungsbeispiel)

Rezeptur: 1.    188 Teile eines Polyethers wie in Beispiel 12
         2.     46 Teile Ethylengylkol
         3.     15 Teile Dichlormethan
         4.   0,15 Teile Zinnkatalysator wie in Beispiel 12
         5.    0,2 Teile Triethylendiamin
         6.  135,2 Teile eines NCO-Semiprepolymeren mit
                    einem NCO-Gehalt von 24,5 %, hergestellt aus dem Polyisocyanatgemisch

Le A 23 460

gemäß Beispiel 1 und Dipropylenglykol,

7. 135,5 Teile NCO-Semiprepolymer aus Beispiel 7

Durch Abmischung der Komponenten 1 bis 5 wird eine "Poly-olkomponente" hergestellt, die mit dem Gemisch der Komponenten 6 und 7 (Polyisocyanatkomponente) während eines Zeitraums von 9 Sekunden maschinell vermischt wird. Die Rohstofftemperaturen betrugen 25°C. Die weitere Verarbeitung erfolgt wie in Beispiel 14 beschrieben.

Nach einer Formstandzeit von 180 Sekunden konnte ein Formkörper der Shore D Härte von 65 mit einer sehr guten "green strength" und hoher Steifigkeit entformt werden, der eine gänzend-glatte Oberfläche aufwies.

Le A 23 460

Patentansprüche

1. Verfahren zur Herstellung von Urethangruppen aufweisenden Polyisocyanat-Zubereitungen mit einem NCO-Gehalt von 0,5 bis 45 Gew.-% durch Umsetzung von

   a) organischen Polyisocyanaten mit einem NCO-Gehalt von 30 bis 50 Gew.-% oder Gemischen von organischen Polyisocyanaten mit einem NCO-Gehalt von 30 bis 50 Gew.-% mit

   b) organischen Polyhydroxylverbindungen,

   sowie gegebenenfalls in Gegenwart von

   c) weiteren Hilfs- und Zusatzmitteln,

   unter Einhaltung eines Äquivalentverhältnisses von Isocyanatgruppen zu Hydroxylgruppen von mindestens 1,8:1, dadurch gekennzeichnet, daß man als Polyhydroxylverbindungen b)

   b1) gegebenenfalls seitenständige Urethan- oder Estergruppen und im statistischen Mittel pro Molekül mindestens eine alkoholische Hydroxylgruppe aufweisende Polyhydroxypolyacrylate eines dampfdruckosmometrisch bestimmbaren

Le A 23 460

mittleren Molekulargewichts von 232 bis 100 000, gegebenenfalls in Abmischung mit bis zu 250 Gew.-%, bezogen auf b1), an

b2) anderen aus der Polyurethanchemie an sich bekannten Polyhydroxylverbindungen des Molekulargewichtsbereichs 62 bis 12 000

verwendet.

2. Verfahren gemäß Anspruch 1, dadurch gekennzeichnet, daß man als Komponente b1) gegebenenfalls seitenständige Ester- oder Urethangruppen aufweisende Polyhydroxypolyacrylate eines dampfdruckosmometrisch bestimmbaren Molekulargewichts von 2000 bis 50 000 verwendet.

3. Verfahren gemäß Anspruch 1 und 2, dadurch gekennzeichnet, daß man als Komponente c) gegebenenfalls neben weiteren Hilfs- und Zusatzmitteln, mindestens ein, bei Raumtemperatur im Reaktionsgemisch lösliches bzw. mit dem Reaktionsgemisch verträgliches, gegenüber Isocyanatgruppen inertes Polymerisat oder Copolymerisat des dampfdruckosmometrisch bestimmbaren Molekulargewichts 200 bis 50 000 mindestens eines olefinisch ungesättigten Monomeren, in einer Gesamtmenge von bis zu 250 Gew.-%, bezogen auf das Gewicht der Komponente b) verwendet.

Le A 23 460

4.	Verfahren gemäß Anspruch 1 bis 3, dadurch gekennzeichnet, daß man als Komponente c), gegebenenfalls neben weiteren gegebenenfalls mitzuverwendenden Hilfs- und Zusatzmitteln, mindestens ein, gegenüber Isocyanatgruppen inertes Lösungsmittel in einer Gesamtmenge von bis zu 200 Gew.-%, bezogen auf das Gewicht der Komponente b1), verwendet.

5.	Gemäß Anspruch 1 bis 4 erhältliche Polyisocyanat-Zubereitungen.

6.	Verwendung der gemäß Anspruch 1 bis 4 erhältlichen Polyisocyanat-Zubereitungen als Aufbaukomponente bei der Herstellung von Polyurethanen oder von Polyurethanpolyharnstoffen nach dem Isocyanat-Polyadditionsverfahren.

7.	Verwendung gemäß Anspruch 6 zur Herstellung von gegebenenfalls zellförmigen Formkörpern mit einer geschlossenen Oberfläche durch Umsetzung in einer geschlossenen Form eines Reaktionsgemisches aus

(i)	mindestens einem organischen Polyisocyanat,

(ii)	mindestens einer Verbindung mit einem Molekulargewicht zwischen 400 und 12 000, welche mindestens zwei gegenüber Isocyanatgruppen reaktionsfähige Gruppen aufweist,

(iii)	gegebenenfalls mindestens einer Verbindung des Molekulargewichts 32 bis 399 mit min-

Le A 23 460

destens zwei gegenüber Isocyanatgruppen reaktionsfähigen Gruppen, und

(iv) gegebenenfalls den in der Polyurethanchemie
an sich bekannten Hilfs- und Zusatzstoffen,

dadurch gekennzeichnet, daß man als Komponente (i)
zumindest anteilig eine Polyisocyanat-Zubereitung
der in Anspruch 6 genannten Art verwendet.

Le A 23 460